# EUROPÄISCHE PATENTSCHRIFT

(11) **EP 1 209 993 B1**
(45) Veröffentlichungstag und Bekanntmachung des Hinweises auf die Patenterteilung: **17.09.2003**
(21) Anmeldenummer: 00944184.1
(22) Anmeldetag: 28.06.2000
(51) Int. Cl.: A44C 15/00

(54) **SATZ VON SCHMUCKSTÜCKEN**
JEWELRY PIECE SET
JEU DE BIJOUX

(30) Priorität: 19.08.1999 AT 143099
(43) Veröffentlichungstag der Anmeldung: 05.06.2002
(73) Patentinhaber: Masina, Klara, Frieda, geb. Hauri, 5707 Seengen (CH); Masina, Roberto, Pietro, 5707 Seengen (CH)
(72) Erfinder: Masina, Klara, Frieda, geb. Hauri, 5707 Seengen (CH); Masina, Roberto, Pietro, 5707 Seengen (CH)
(74) Vertreter: Atzwanger, Richard, Dipl.-Ing. Patentanwalt
(86) Internationale Anmeldenummer: IB0001068
(87) Internationale Veröffentlichungsnummer: WO01013753

(56) Entgegenhaltungen:
- US-A- 3 192 737
- US-A- 4 353 225
- US-A- 4 982 580
- US-A- 5 023 978
- US-A- 5 044 175
- US-A- 5 048 311
- US-A- 5 456 095
- US-A- 5 583 584

## Beschreibung

Die gegenständliche Erfindung betrifft einen Satz von Schmuckstücken u.dgl., welcher mindestens einen Ring und mehrere Ohrstecker sowie andere Schmuckstücke, vorzugsweise ein Collier und einen Armreifen, enthält, wobei die Ohrstecker in ein Schmuckstück einsetzbar sind. Aus US-A-4 982 580 ist ein Satz von Schmuckstücken bekannt, welcher eine Brosche und mehrere Ohrstecker unterschiedlicher Art enthält.

Bekannte Schmuckstücke sind als Ringe, Colliers, Armreifen u.dgl. ausgebildet. Weiters sind Schmuckstücke auch als Ohrstecker ausgebildet. Bekannte Schmuckstücke bzw. Ohrstecker stellen dabei immer nur einzelne Elemente dar, welche zwar gemeinsam verwendet werden können, welche jedoch nicht zu einem einzigen Schmuckstück kombiniert werden können. Deshalb ist es auch nicht möglich, Schmuckstücke in ihrem Aussehen zu verändern, z.B um diese dadurch auf Ohrstecker abzustimmen.

Der gegenständlichen Erfindung liegt somit die Aufgabe zugrunde, einen Satz von Schmuckstücken und Ohrsteckern zu schaffen, welcher es ermöglicht, einzelnen Schmuckstücke unter Verwendung von Ohrsteckern des Satzes zu verändern, wodurch es insbesondere ermöglicht wird, Schmuckstücke so aufeinander abzustimmen, daß sie jeweils ein übereinstimmendes Element enthalten. Dies wird erfindungsgemäß dadurch erzielt, daß der Satz jeweils eine Mehrzahl von Ohrsteckern unterschiedlicher Arten enthält und daß der mindestens eine Ring sowie die anderen Schmuckstücke, wie das Collier und der Armreifen, jeweils mit mindestens einer Bohrung ausgebildet sind, welche eine Mindestlänge von 8 mm aufweist und in welche einer der Ohrstecker einsetzbar sowie in dieser lösbar gehalten ist.

Vorzugsweise enthält der Satz zudem eine Brosche bzw. einen Ohrclips, welcher mit mindestens einer Bohrung ausgebildet sind, in welche einer der Ohrstecker einsetzbar ist. Weiters kann er auch eine Armbanduhr enthalten, welche mit mindestens einer Bohrung ausgebildet ist, in welche einer der Ohrstecker einsetzbar ist. Zudem kann der Satz auch eine Brille enthalten, welche mit mindestens einer Bohrung ausgebildet ist, in welche einer der Ohrstecker einsetzbar ist.

Zur lösbaren Befestigung der Ohrstecker in den Schmuckstücken od.dgl. können die Bolzen der Ohrstecker als Gewindebolzen ausgebildet sein und können die in den Schmuckstücken u.dgl. vorgesehenen Bohrungen als Gewindebohrungen ausgebildet sein. Alternativ dazu können auch mechanische Befestigungselemente, wie Bajonettverschlüsse bzw. Federelemente, sogenannte Clips, weiters sogenannte Piercingverschlüsse, oder auch Magnetverschlüsse vorgesehen sein, mittels welcher die Bolzen der Ohrstecker in den Bohrungen der Schmuckstücke u.dgl. lösbar gehalten sind.

Der Gegenstand der Erfindung ist nachstehend anhand von in der Zeichnung dargestellten Ausführungsbeispielen näher erläutert. Es zeigen:
- Fig.1: einen Ring, in welchen ein Ohrstecker eingesetzt ist, in axonometrischer Darstellung;
- die Fig. 1a, 1b und 1 c: den Ring nach Fig. 1 mit unterschiedlichen Arten der Befestigung des Ohrsteckers, jeweils im Schnitt nach der Linie A-A der Fig. 1;
- die Fig. 2 und 2a: einen zweiten Ring, in welchen ein Ohrstecker eingesetzt ist, in axonometrischer Darstellung und im Schnitt nach der Linie B-B;
- Fig. 2b: einen dritten Ring, in welchen ein Ohrstecker eingesetzt ist;
- die Fig. 3 und 3a: einen vierten Ring, in welchen zwei Ohrstecker eingesetzt sind, in axonometrischer Darstellung und im Schnitt nach der Linie C-C;
- die Fig. 4 und 4a: eine Brosche, in welche ein Ohrstecker eingesetzt ist, in axonometrischer Darstellung und im Schnitt nach der Linie D-D;
- die Fig. 5 und 5a: ein Collier, in welches ein Ohrstecker eingesetzt ist, in axonometrischer Darstellung und im Schnitt nach der Linie E-E;
- die Fig. 6 und 6a: einen Armreifen, in welchen ein Ohrstecker eingesetzt ist, in axonometrischer Darstellung und im Schnitt nach der Linie F-F;
- die Fig. 7, 7a und 7b: eine Uhr, welche mit einem Schmuckelement ausgebildet ist, in Draufsicht und dieses Schmuckelement in axonometrischer Darstellung sowie im Schnitt nach der Linie G-G;
- Fig. 8: einen Ohrclips, in Seitenansicht sowie teilweise aufgebrochen, und
- Fig. 9: eine Brille, in axonometrischer Darstellung.

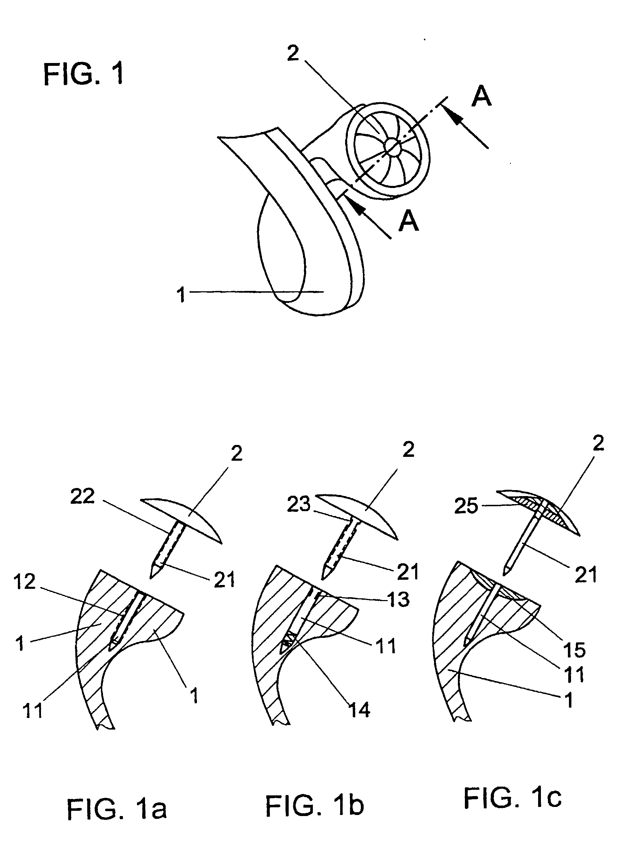

In Fig. 1 ist ein Ring 1 dargestellt, in welchen ein Ohrstecker 2 eingesetzt ist. Wie dies aus den Fig. 1a, 1b und 1c ersichtlich ist, ist der Ring 1 mit einer Bohrung 11 ausgebildet, in welche der Bolzen 21 des Ohrsteckers 2 einsetzbar ist.

Nach dem Ausführungsbeispiel der Fig.1a ist die Bohrung 11 mit einem Gewinde 12 ausgebildet und ist der Bolzen 21 ebenfalls mit einem Gewinde 22 ausgebildet, wodurch der Ohrstecker 2 in die Bohrung 11 des Ringes 1 einschraubbar ist.
Nach dem Ausführungsbeispiel der Fig.1b ist die Bohrung 11 mit Kupplungselementen 13 nach Art eines Bajonettverschlusses ausgebildet sowie befindet sich in dieser eine Schraubendruckfeder 14 und ist der Bolzen 21 gleichfalls mit Kupplungselementen 23 ausgebildet.
Nach dem Ausführungsbeispiel der Fig.1c ist der Ring mit einem ersten Magnetelement ausgebildet und ist der Ohrstecker 2 mit einem zweiten Magnetelement 25 ausgebildet, welche miteinander zusammenwirken.

Somit kann der Ohrstecker 2 im Ring 1 durch Verschraubung, durch Verriegelung oder durch Magnetkraft gehalten werden. Alternativ dazu kann die Befestigung des Bolzens 21 in der Bohrung 11 auch mittels Federelementen, sogenannten Clipselementen, welche in der Bohrung oder am Bolzen vorgesehen sind, erfolgen.

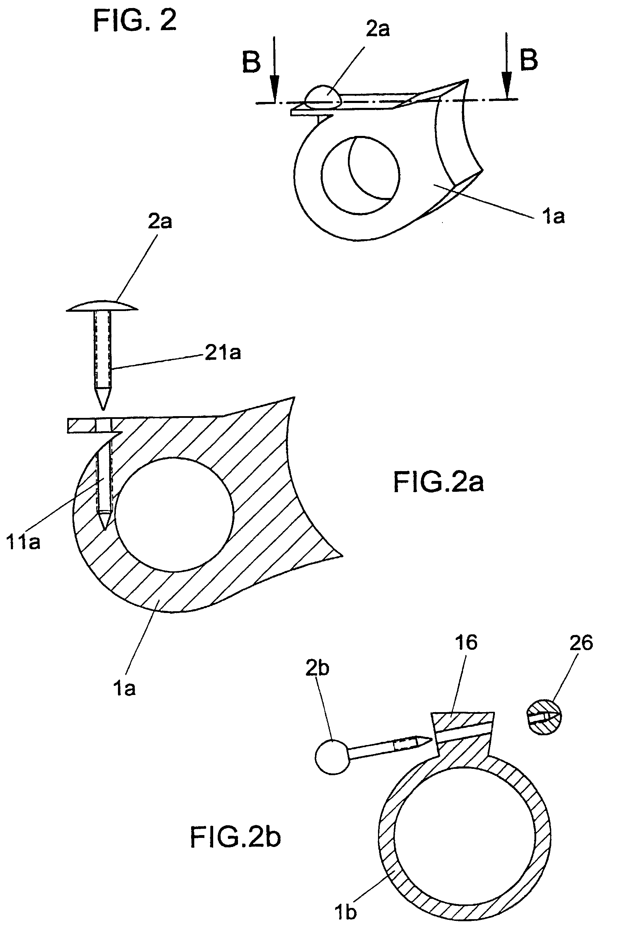

In den Fig.2 und 2a ist ein zweiter Ring 1a dargestellt, welcher gleichfalls mit einer Bohrung 11a ausgebildet ist, in welche ein Ohrstecker 2a einsetzbar ist. In der Darstellung sind die Bohrung 11a und der Bolzen 21a des Ohrsteckers 2a mit einem Gewinde ausgebildet. Auch dabei kann die Befestigung des Ohrsteckers 2a in der Bohrung 11a des Ringes 1a mittels einer Kupplung nach Art eines Bajonettverschlusses, mittels Federelementen oder mittels Magnetelementen erfolgen.

In Fig.2b ist ein dritter Ring 1b dargestellt, welcher mit einem mit einer Bohrung versehenen Fortsatz 16 ausgebildet ist, in welchen ein Ohrstecker 2b einsetzbar ist. Dabei ist der Bolzen des Ohrsteckers 2b mit einem Gewinde ausgebildet und ist dem Ohrstecker 2b ein Schraubelement 26 zugeordnet, welches auf den Bolzen des Ohrsteckers aufschraubbar ist, wodurch der Ohrstecker 2b am Ring 1b befestigbar ist.

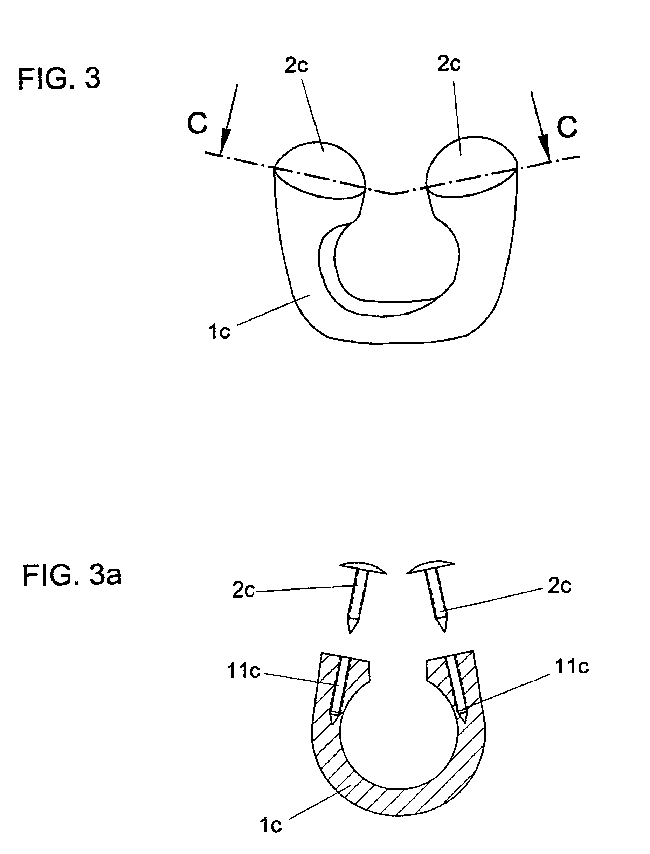

In den Fig.3 und 3a ist ein vierter Ring 1c dargestellt, welcher mit zwei Bohrungen 11c ausgebildet ist, in welche zwei Ohrstecker 2c einschraubbar sind. Auch hierbei kann die Befestigung der Ohrstecker 2c im Ring 1c mittels Kupplungen nach Art von Bajonettverschlüssen, mittels Federelementen oder mittels Magnetverschlüssen bewirkt werden.

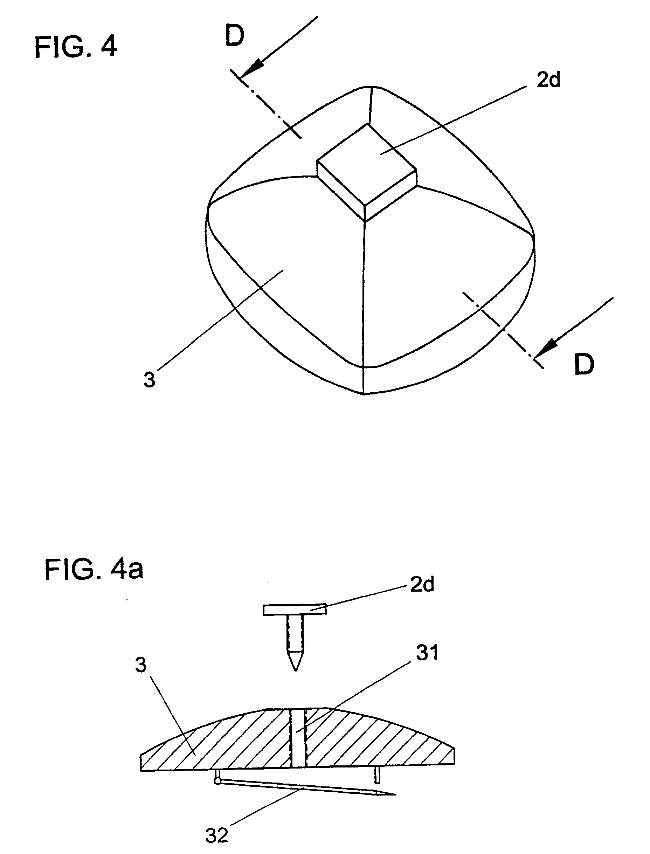

In den Fig.4 und 4a ist eine Brosche 3 dargestellt, welche mittels einer Verschlußnadel 32 auf einem Kleidungsstück befestigt werden kann. Auch diese Brosche 3 ist mit einer Bohrung 31 ausgebildet, in welche ein Ohrstecker 2d einsetzbar und in dieser befestigbar ist.

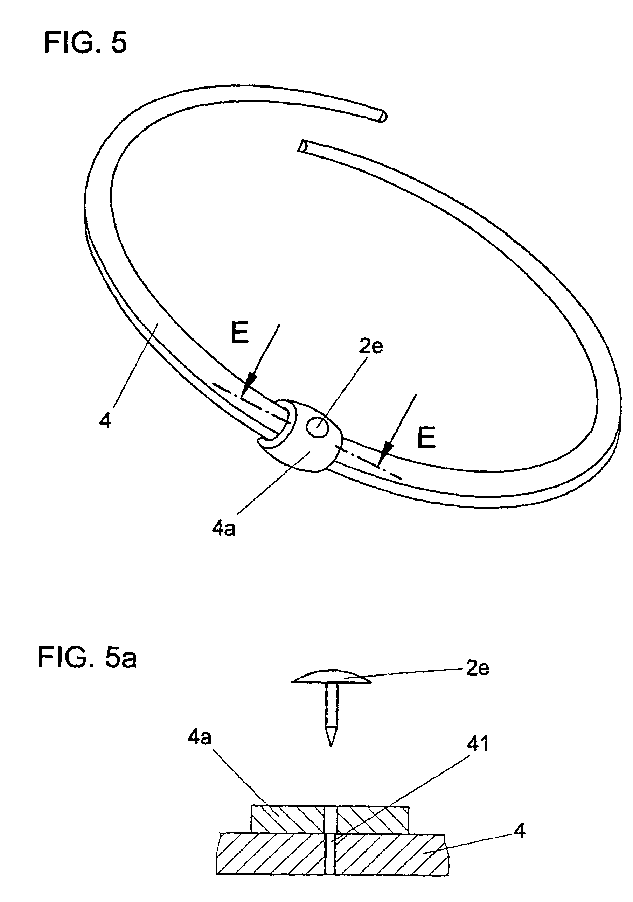

In den Fig.5 und 5a ist ein Collier 4 dargestellt, welches mit einer Hülse 4a ausgebildet ist, welche mit einer Bohrung 41 versehen ist, in welchen ein Ohrstecker 2e einsetzbar und in dieser befestigbar ist.

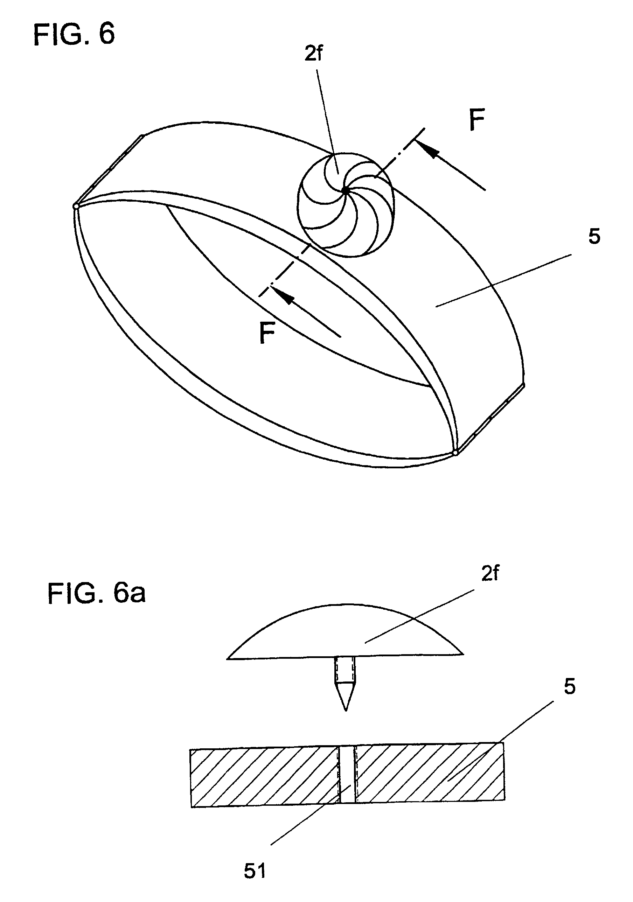

In den Fig.6 und 6a ist ein Armreifen 5 dargestellt, welcher gleichfalls mit einer Bohrung 51 ausgebildet ist, in welche ein Ohrstecker 2f einschraubbar ist.

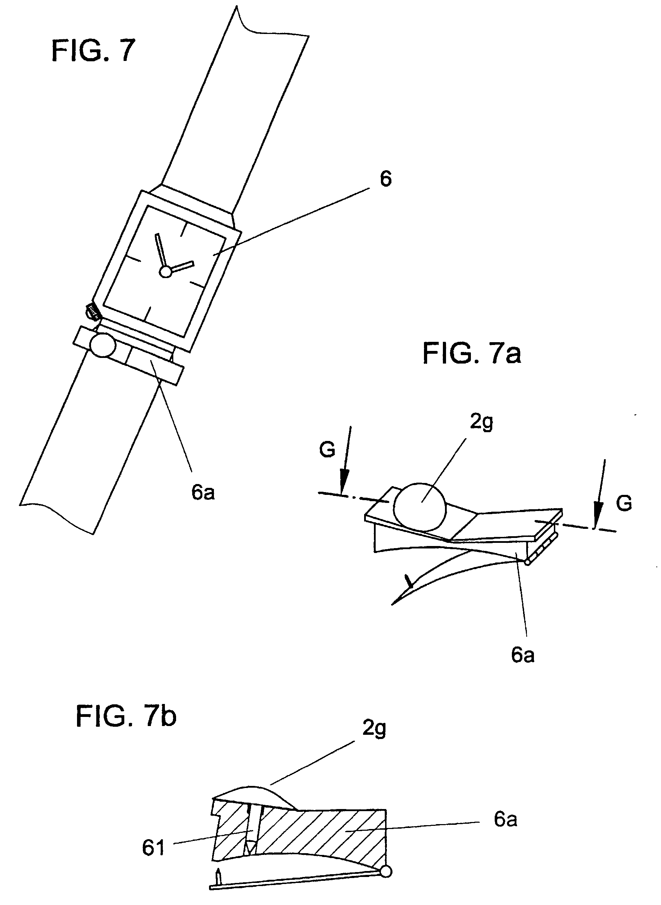

In den Fig.7, 7a und 7b ist eine Armbanduhr 6 dargestellt, welche mit einem Schmuckelement 6a ausgebildet ist. Dabei ist das Schmuckelement 6a mit einer Bohrung 61 ausgebildet, in welche ein Ohrstecker 2g einsetzbar ist.

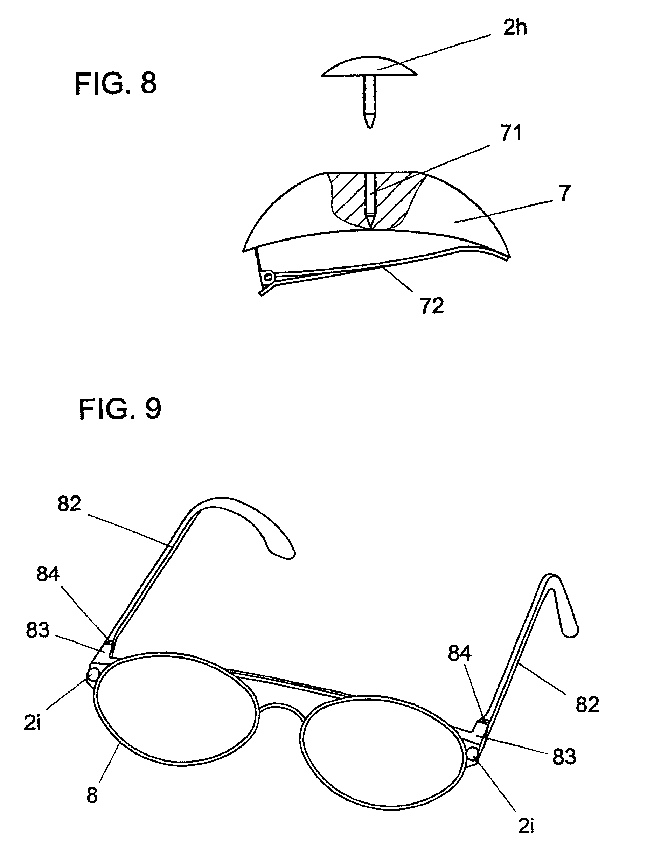

In Fig.8 ist ein Ohrclips 7 dargestellt, welches gleichfalls mit einer Bohrung 71 ausgebildet ist, in welche ein Ohrstecker 2h einsetzbar ist. Die Befestigung des Ohrclips 7 erfolgt mittels eines unter Wirkung einer Feder stehenden Schwenkbügels 72.

In Fig.9 ist eine Brille 8 dargestellt, welche in den beiden seitlichen Bereichen 83, an welchen die Brillenbügel 82 mittels eines Scharniers 84 angelenkt sind, ebenfalls mit Bohrungen ausgebildet sind, in welche Ohrstecker 2i einsetzbar sind.

Die lösbare Befestigung der Ohrstecker in den Bohrungen der Schmuckstücke od.dgl. kann jeweils durch Verschraubung, durch mechanische Verriegelung nach Art eines Bajonettverschlusses, mittels Federelementen, sogenannter Clipelemente, mittels sogenannter Piercingverschlüsse, mittels Schraubelementen, mittels Magnetelementen oder in beliebiger anderer Weise erfolgen. Maßgeblich ist, daß die Bohrungen in den Schmuckelementen, welche als offene Durchgangsbohrungen oder als Sackbohrungen ausgebildet sein können, jeweils eine Mindestlänge von etwa 8 mm aufweisen, sodaß in diese ein Ohrstecker eingesetzt werden kann.

## Patentansprüche

1. Satz von Schmuckstücken und dgl., welcher mindestens einen Ring und mehrere Ohrstecker sowie andere Schmuckstücke, vorzugsweise ein Collier und einen Armreifen, enthält, wobei die Ohrstecker in ein Schmuckstück einsetzbar sind und wobei ferner der Satz jeweils eine Mehrzahl von Ohrsteckern (2, 2a bis 2g) unterschiedlicher Arten enthält und daß der mindestens eine Ring (1) sowie die anderen Schmuckstücke, wie das Collier (4) und der Armreifen (5), jeweils mit mindestens einer Bohrung (11, 41, 51) ausgebildet sind, welche eine Mindestlänge von 8 mm aufweist und in welche einer der Ohrstecker (2, 2a bis 2g) einsetzbar sowie in dieser lösbar gehalten ist.

2. Satz nach Patentanspruch 1, **dadurch gekennzeichnet, daß** er zudem eine Brosche (3) oder einen Ohrclips (7) enthält, welche in an sich bekannter Weise mit mindestens einer Bohrung (31, 71) ausgebildet sind, in welche einer der Ohrstecker (2d, 2h) einsetzbar ist.

3. Satz nach einem der Patentansprüche 1 und 2, **dadurch gekennzeichnet, daß** er weiters eine Armbanduhr (6) enthält, welche mit mindestens einer Bohrung (61) ausgebildet ist, in welche einer der Ohrstecker (2g) einsetzbar ist.

4. Satz nach einem der Patentansprüche 1 bis 3, **dadurch gekennzeichnet, daß** er weiters eine Brille (8) enthält, welche mit mindestens einer Bohrung ausgebildet ist, in welche einer der Ohrstecker (2i) einsetzbar ist.

5. Satz nach einem der Patentansprüche 1 bis 4, **dadurch gekennzeichnet, daß** die Bolzen (21) der Ohrstecker (2) als Gewindebolzen ausgebildet sind und daß die in den Schmuckstücken (1) u. dgl. vorgesehenen Bohrungen (11) als Gewindebohrungen (12) ausgebildet sind.

6. Satz nach einem der Patentansprüche 1 bis 5, **dadurch gekennzeichnet, daß** die lösbare Befestigung der Ohrstecker in den Bohrungen mittels mechanischer Verriegelung, nach Art eines Bajonettverschlusses, mittels Federelementen, sogenannten Clipelementen, mittels eines Schraubteiles oder mittels Magnetelementen bewirkt wird.

## Claims

1. A set of jewelry and the like which contains at least one ring and a plurality of stud earrings as well as other pieces of jewelry, preferably a necklace and a bangle, it being possible for the stud earrings to be inserted into a piece of jewelry, and whereby the set further contains in each case a plurality of stud earrings (2, 2a to 2g) of different types, and in that the at least one ring (1) and the other pieces of jewelry, such as the necklace (4) and the bangle (5), are each designed with at least one bore (11, 41, 51) which has a minimum length of 8 mm and into which one of the stud earrings (2, 2a to 2g) can be inserted and is retained releasably therein.

2. The set as claimed in patent claim 1, **characterized in that** it additionally contains a brooch (3) or a clip earring (7), which are designed, in a manner known per se, with at least one bore (31, 71) into which one of the stud earrings (2d, 2h) can be inserted.

3. The set as claimed in either of patent claims 1 and 2, **characterized in that** it further contains a wristwatch (6) which is designed with at least one bore (61) into which one of the stud earrings (2g) can be inserted.

4. The set as claimed in one of patent claims 1 to 3, **characterized in that** it further contains a pair of glasses (8) which is designed with at least one bore into which one of the stud earrings (2i) can be inserted.

5. The set as claimed in one of patent claims 1 to 4, **characterized in that** the pins (21) of the stud earrings (2) are designed as threaded pins, and **in that** the bores (11) provided in the pieces of jewelry (1) and the like are designed as threaded bores (12).

6. The set as claimed in one of patent claims 1 to 5, **characterized in that** the stud earrings are fastened releasably in the bores by means of mechanical locking, in the manner of a bayonet closure, by means of resilient elements, so-called clip elements, by means of so-called piercing closures, by means of screw-connection parts or by means of magnetic elements.

## Revendications

1. Parure de bijoux et similaires qui contient au moins une bague et plusieurs clous d'oreille ainsi que d'autres bijoux, de préférence un collier et un bracelet, les clous d'oreille pouvant être insérés dans un bijou et la parure contenant en outre une pluralité de clous d'oreille (2, 2a à 2g) de types différents et le ou les bague(s) (1) ainsi que les autres bijoux, tels que le collier (4) et le bracelet (5), étant réalisés chacun avec au moins un perçage (11, 41, 51) qui présente une longueur minimale de 8 mm et dans lequel l'un des clous d'oreille (2, 2a à 2g) peut être inséré et maintenu dans celui-ci de manière séparable.

2. Parure selon la revendication 1, **caractérisée en ce qu'**elle contient en outre une broche (3) ou un clip d'oreille (7) qui sont réalisés de manière connue avec au moins un perçage (31, 71) dans lequel on peut insérer l'un des clous d'oreille (2d, 2h).

3. Parure selon l'une des revendications 1 ou 2, **caractérisée en ce qu'**elle contient en outre une montre-bracelet (6) qui est réalisée avec au moins un perçage (61) dans lequel on peut insérer l'un des clous d'oreille (2g).

4. Parure selon l'une des revendications 1 à 3, **caractérisée en ce qu'**elle contient en outre des lunettes (8) qui sont réalisées avec au moins un perçage dans lequel on peut insérer l'un des clous d'oreille (2i).

5. Parure selon l'une des revendications 1 à 4, **caractérisée en ce que** les tiges (21) des clous d'oreille (2) sont réalisées sous la forme de tiges filetées et **en ce que** les perçages (11) prévus dans les bijoux (1) et similaires sont réalisés comme des trous taraudés (12).

6. Parure selon l'une des revendications 1 à 5, **caractérisée en ce que** la fixation séparable des clous d'oreille dans les perçages s'effectue au moyen d'un verrouillage mécanique du type d'une fermeture à baïonnette, au moyen d'éléments à ressort dits éléments clips, au moyen d'un élément à vis ou au moyen d'éléments magnétiques.
